# EUROPEAN PATENT APPLICATION

(11) **EP 1 475 504 A1**
(43) Date of publication of application: **10.11.2004**
(21) Application number: 04010804.5
(22) Date of filing: 06.05.2004
(51) Int. Cl.: E06B 1/60, F16B 5/02

(54) **Screw with sleeve**

(30) Priority: 08.05.2003 JP 2003130473
(71) Applicant: WAKAI & CO., LTD., Higashiosaka-shi, Osaka (JP)
(72) Inventor: Horita, Hiroshi,c/o Wakai & Co., Ltd., Higashiosaka-shi Osaka (JP)
(74) Representative: Glawe. Delfs. Moll

(57) **Abstract**

A screw (11) for fastening two wooden members (2,5) together which can be turned with a smaller force when the screw (11) is driven into both two members so that the distance between the two members is easily and accurately adjustable. The screw includes a shank (12) and a head (14) provided at one end of the shank. The shank has a tip (15) at the other end thereof, and includes a thread (17) extending from an intermediate portion thereof to the tip, and an annular rib (19) provided on the non-threaded portion of the shank. A tubular spacer (21) having an axial slit (20) is adapted to be rotatably fitted around the shank between the head and the annular rib. The spacer has an outer diameter greater than the outer diameter of the annular rib. The annular rib has an outer diameter smaller than the major diameter of the thread.

## Description

### BACKGROUND OF THE INVENTION

This invention relates to a screw used to fasten a wooden member defining an opening of a house to another wooden member coupled to a sash to be fitted in the opening such that the distance between the wooden members is adjustable.

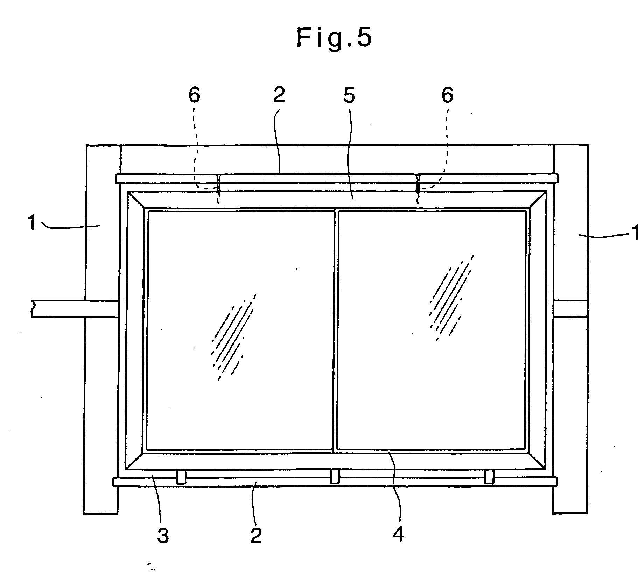

For example, a sash is fitted in an opening of a house as shown in Fig. 5. The opening 3 is defined by two pillars 1 and crosspieces 2 extending between the pillars at different heights. With a wooden frame 5 fastened to a sash 4, the sash is fitted in the opening 3, and the wooden frame 5 is fixed to the crosspieces 2 using screws 6.

When or after fixing the wooden frame 5 to the crosspieces 2, it is often necessary to adjust the distance between the wooden frame 5 and the respective crosspieces 2 to keep the sash 4 horizontal or move it up or down with respect to the crosspieces 2. For this purpose, after the screws 6 have been driven into both the crosspieces 2 and the wooden frame 5, they are turned clockwise or counterclockwise.

Such a conventional screw 6 comprises a shank, a pointed tip provided at one end of the shank, and a head provided at the other end of the shank. A thread is formed on the shank so as to extend from its intermediate portion to the tip. A plurality of flanges having a greater diameter than the major diameter of the thread are formed on the shank between the intermediate portion of the shank and the head.

To fasten the wooden frame 5 to each crosspiece 2 such that they are spaced a predetermined distance from each other, a plurality of screws 6 as described above are driven into the crosspieces 2 and then into the wooden frame 5 until their heads abut the outer surfaces of the crosspieces 2. As each screw is driven in, the thread cuts a hole in one of the crosspieces and then in the wooden frame, and the flanges are pushed into the hole formed in the crosspiece by the thread.

Once the flanges are pushed into the hole formed in each crosspiece, the flanges engage the inner wall of the hole, so that the screw is least likely to be pulled out of the crosspiece. It can however be turned. By turning the screw in this state, the wooden frame is moved toward or away from the crosspiece. That is, the distance between the wooden frame and the crosspiece is adjustable. Such screws are disclosed in JP patent publications 61-43563 and 3-166481.

Because the wooden crosspieces 2 have some elasticity, that is, the wooden frame tends to return to the original state after being deformed under external force as soon as this external force disappears, the hole formed in one of the crosspieces by the thread of each screw shrinks immediately after the thread has passed. Thus when the flanges, which have a diameter greater than the major diameter of the thread, are pushed into this hole, they are pressed hard against the inner wall of the hole. This increases the resistance to rotation of the screw. Since a large force is needed to turn the screw after the flanges have been pushed into the hole formed in the crosspiece to adjust the distance between the crosspiece and the wooden frame, it was difficult to finely and accurately adjust such a distance.

An object of this invention is to provide a screw for fastening two wooden members together which can be turned with a smaller force when the screw is driven into both two members so that the distance between the two members is easily and accurately adjustable.

### SUMMARY OF THE INVENTION

According to this invention, there is provided a screw comprising a shank having a head provided at one end thereof and a tip at the other end thereof, the shank having a thread extending from an intermediate portion of the shank to the tip, and a non-threaded portion extending from the intermediate portion to the head, the non-threaded portion being formed with a first rib; and a tubular spacer having a slit extending substantially in an axial direction of the spacer over the entire length thereof, the spacer being adapted to be rotatably fitted around the shank between the head and the first rib.

Preferably, the shank includes a second rib which is lower in height than the first rib and provided on the outer surface of the shank where the tubular spacer is adapted to be fitted. Preferably, the thread has a major diameter, the first rib is a substantially annular member having an outer diameter smaller than the major diameter of the thread, and the spacer has an outer diameter greater than the outer diameter of the first rib.

The tubular spacer is formed of an elastic metal or synthetic resin. When the spacer is not stressed, it has an inner diameter equal to or slightly greater than the outer diameter of the portion of the shank where the thread is not present, and an outer diameter greater than the major diameter of the thread. The slit formed in the spacer has a width smaller than the outer diameter of the portion of the shank where the thread is not present when the spacer is not stressed. By pushing the spacer toward the non-threaded portion of the shank with the slit pressed against the non-threaded portion, the slit opens wide and the spacer can be fitted around the non-threaded portion.

The slit may linearly extend substantially parallel to the axis of the spacer, or may be a curved one extending oblique to the axis of the spacer. Preferably, the spacer has the outer edge of at least one end thereof chamfered.

The first rib may be a continuous annular member, or may comprise a plurality of discontinuous protrusions arranged in a circle. An additional rib similar to the first rib may be provided on the non-threaded portion of the shank between the head and the first rib. If the additional rib is provided, the spacer is mounted on the non-threaded portion of the shank between the first rib and the additional rib. Preferably, the first rib has the lower half portion of its outer surface tapered radially outwardly and upwardly to reduce the frictional resistance when the screw is driven in.

The second rib serves to reduce the contact area between the non-threaded portion of the shank and the spacer, thus allowing the screw body to more smoothly turn in the spacer. The second rib has an outer diameter equal to or slightly smaller than the inner diameter of the spacer when the spacer is not stressed.

### BRIEF DESCRIPTION OF THE DRAWINGS

Other features and objects of the present invention will become apparent from the following description with reference to the drawings, in which:
Fig. 1 is an enlarged front view of a screw embodying the present invention:
Fig. 2A is an enlarged sectional view along line a·a of Fig. 1;
Fig. 2B is a perspective view of one example of a spacer;
Figs. 2C, 2D and 2E are front views of other examples of spacers;
Fig. 3A is a partial front view of the screw of a first embodiment of the present invention in which a single rib is formed on the non-threaded portion of the shank;
Fig. 3B is a partial front view of the screw of a second embodiment in which the spacer is removed to show a pair or ribs provided on the non-threaded portion of the shank;
Fig. 3C is a partial front view of the screw of a third embodiment in which a pair of small-diameter ribs are provided between ribs similar to the ribs of Fig. 2B;
Fig. 3D is a partial vertical sectional view of Fig. 3C;
Fig. 3E is a partial front view of the screw of a fourth embodiment in which a pair of small-diameter ribs are provided between ribs somewhat similar to the ribs of Fig. 2B;
Fig. 4 is a vertical sectional view of the screw embodying the present invention as used to couple two wooden members together; and
Fig. 5 is a front view of a sash showing how it is mounted to an opening of a house using screws.

### DETAILED DESCRIPTION OF THE PREFERRED EMBODIMENT

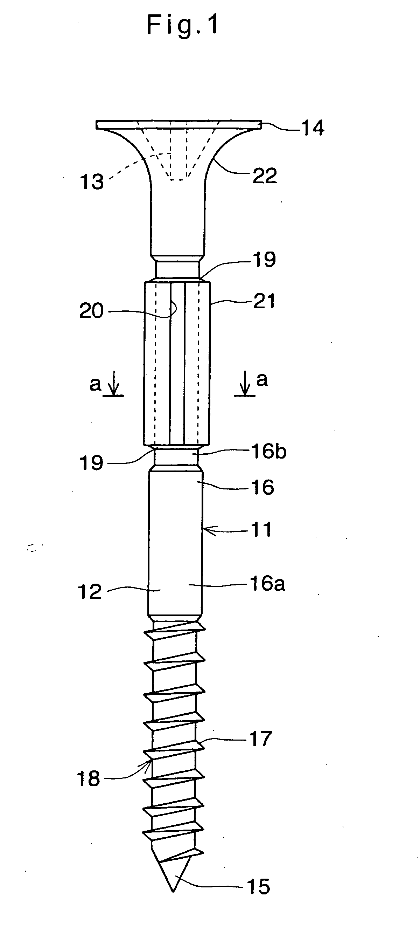

First referring to Fig. 1, the screw 11 embodying the present invention comprises a shank 12 having a pointed tip 15 at one end thereof, and a head 14 provided at the other end thereof and formed with a recess 13 for accepting a driver bit. The shank 12 comprises a non-threaded portion 16 extending from the head 14 to an intermediate portion of the shank 12, and a threaded portion 18 extending from the intermediate portion to the pointed tip 15. A thread 17 is formed on the threaded portion 18.

The head 14 connects to the non-threaded portion 16 through a funnel-shaped portion 22. The non-threaded portion 16 comprises an upper small-diameter portion 16b having a smaller diameter than the bottom of the funnel-shaped portion 22 and connected thereto through a shoulder, and a lower large-diameter portion 16a having its top end connected to the small-diameter portion 16b through a shoulder and its bottom end connected to the threaded portion 18.

In the embodiment of Fig. 1, a pair of annular ribs 19 are formed on the small-diameter portion 16b, one near the head and the other near the large-diameter portion 16a. A tubular spacer 21 having an axial slit 20 extending the entire length thereof is fitted on the small-diameter portion 16b between the ribs 19 so as to be rotatable relative to the shank 12.

The large-diameter portion 16a of the non-threaded portion 16 of the screw 11 has a diameter smaller than the major diameter of the thread 17. The small-diameter portion 16b has a smaller diameter than the large-diameter portion 16a. The ribs 19 have an outer diameter smaller than the major diameter of the thread 17.

The lengths of the various parts of the screw 11 differ with the thicknesses of wooden members to be fixed together using the screw 11. For example, if wooden members or crosspieces 2 to which a wooden frame 5 is to be mounted are 25 mm thick and the wooden frame 5 is 30 mm thick, the threaded portion 18 is preferably about 15-25 mm long, and the length of the remaining portion, i.e. the total length of the non-threaded portion 16 and the funnel-shaped portion 22 is preferably about 30-32 mm long.

The tubular spacer 21, which is to be fitted around the small-diameter portion 16b of the non-threaded portion 16, is formed of a metal or a synthetic resin having elasticity. In order that the spacer 21 can freely rotate relative to the shank 12 when fitted around the small-diameter portion 16b, the spacer 21 has an inner diameter equal to or slightly greater than the diameter of the small-diameter portion 16b of the non-threaded portion 16 when the spacer 21 is not stressed. The spacer 21 has an outer diameter greater than the major diameter of the thread 17 and thus the outer diameter of the ribs 19 and has a length not greater than the length of the small-diameter portion 16b. When the spacer 21 is not stressed, the slit 20 has a width smaller than the diameter of the small-diameter portion 16b of the non-threaded portion 16. By pushing the spacer 21 toward the small-diameter portion 16b with the slit 20 pressed against the small-diameter portion 16b, the slit 20 will open wide, and the spacer 21 will be fitted around the small-diameter portion 16b.

The spacer 21 may be formed of a metal such as spring steel, hard steel, an oil-tempered metal, stainless steel for springs, 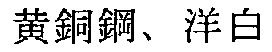 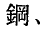 phosphor bronze or beryllium copper, or a synthetic resin selected from among e.g. polyolefins, styrenes, polyvinyls, polyesters and polyamides.

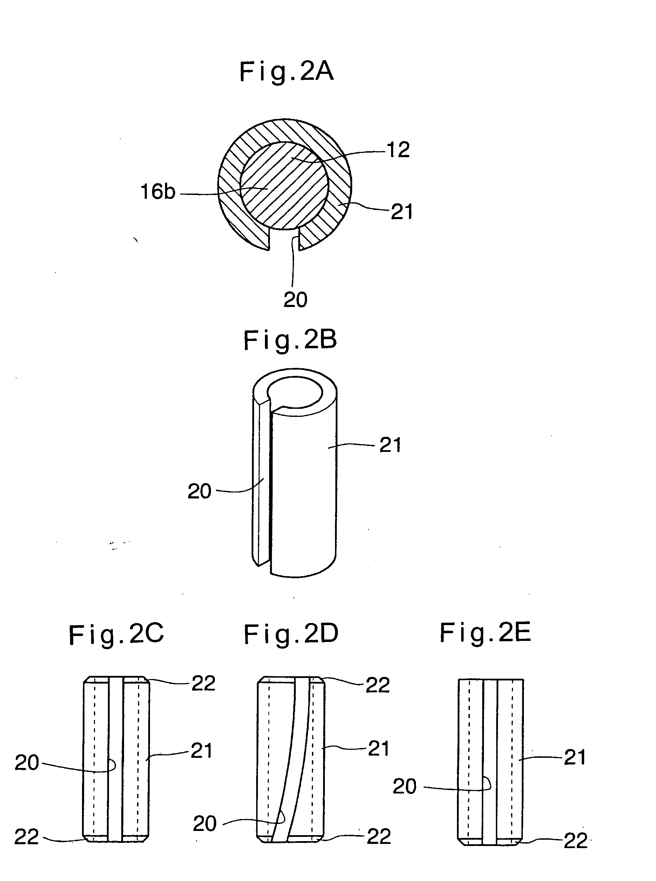

As the spacer 21, any of those shown in Figs. 2B-2E may be used. The spacer 21 shown in Fig. 2B has flat ends perpendicular to its axis and a slit 20 extending linearly parallel to the axis of the spacer. The spacer 21 shown in Fig. 2C differs from the spacer of Fig. 2B in that either of the end faces has its outer edge chamfered. The spacer shown in Fig. 2D differs from the spacer of Fig. 2C in that the slit 20 extends acruately substantially in the axial direction of the spacer. The spacer shown in Fig. 2E differs from the spacer of Fig. 2C in that only one of the end faces has its outer edge chamfered.

By chamfering the outer edge of one or either of the end faces of the spacer 21, the spacer can be smoothly pushed into a hole tapped by the thread 17 in a crosspiece 2.

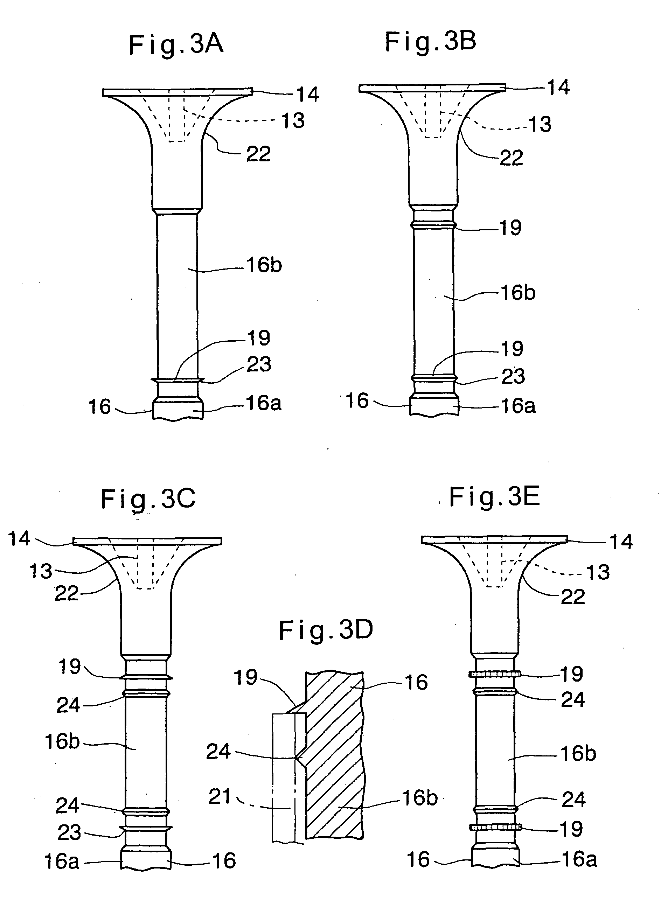

Instead of the ribs 19 shown in Fig. 1 and Fig. 3B, a single such rib 19 may be provided on the small-diameter portion 16b remote from the head 14 as shown in Fig. 3A so that the spacer 21 can be fitted between the rib 19 and the shoulder of the funnel-shaped portion 22. In the arrangement of Fig. 3B, the pair of ribs 19 have to be sufficiently spaced from each other such that the spacer 21 can be fitted therebetween.

The rib or ribs 19 may comprise, instead of a continuous annular flange as shown, a plurality of discontinuous protrusions arranged in a circle. As shown in Fig. 2E, the rib or ribs 19 may have their radially outer surfaces knurled. Preferably, both of the single rib 19 shown in Fig. 3A and the lower one of the pair of ribs 19 as shown e.g. in Fig. 3B have their radially outer surface or at least the lower half portion of their radially outer surface tapered such that their outer diameter increases upwardly as shown at 23 in Figs. 3A-3C so as to reduce the resistance encountered when the screw 11 is driven in. The upper half portion of the radially outer surface of the rib of Fig. 3A or the lower one of the ribs of e.g. Fig. 3B may be tapered in the opposite direction to the tapered surface 23 as shown in Fig. 3B. No such tapered surface needs to be provided on the upper one of the ribs 19 shown e.g. in Fig. 3B.

As shown in Figs. 3C-3E, two small-diameter annular ribs 24 having a smaller outer diameter than the rib or ribs 19 are preferably provided on the small-diameter portion 16b where the spacer 21 is adapted to be fitted, i.e. between the pair of ribs 19 or between the shoulder of the funnel-shaped portion 22 and the rib 19. The upper one of the ribs 24 is provided near the shoulder of the funnel-shaped portion 22 or the upper rib 19, and the lower one of the ribs 24 is provided near the single rib 19 or the lower one of the ribs 19. The ribs 24 serve to reduce the contact area between the spacer 21 and the small-diameter portion 16b of the non-threaded portion 16, thereby allowing the spacer 21 to be rotatable relative to the shank 12 with minimum frictional resistance. In the arrangement where the ribs 24 are provided, the spacer 21 has an inner diameter that is equal to or slightly greater than the outer diameter of the ribs 24 when the spacer 21 is not stressed.

The screw of this invention is used as follows.

As shown in Fig. 5, the screw 11 is used e.g. to secure a sash 4 to an opening 3 of a house which is defined by pillars 1 and crosspieces 2 extending between the pillars 2 at their upper and lower portions. Specifically, the sash 4 is first fitted in and secured to a wooden frame 5, and the wooden frame is inserted in the opening 3 and fastened to the crosspieces 2 using a plurality of the screws 11 of the present invention.

Once fitted around the small-diameter portion 16b of the non-threaded portion 16 as shown in Fig. 1, the spacer 21 can only turn and cannot move axially relative to the shank 12.

The spacer 21 can be fitted around the small-diameter portion 16b by pushing the spacer toward the small-diameter portion 16b with its slit 20 pressed against the small-diameter portion 16b. Specifically, by pushing the spacer toward the small-diameter portion 16b, the spacer is deformed such that the slit 20 is spread open and then closes back to the original width following the contour of the small-diameter portion 16b due to its elasticity until the spacer 21 is fitted around the small-diameter portion 16b.

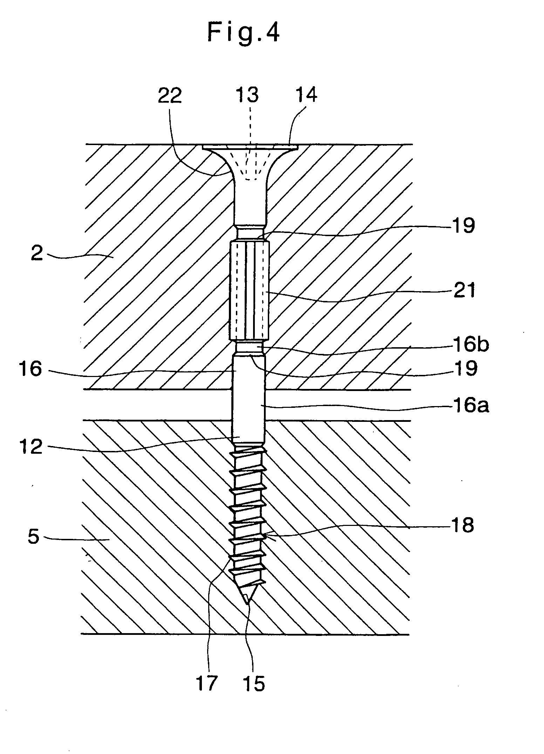

With the spacer 21 fitted, the screw 11 is driven into one of the crosspieces 2 and then into the wooden frame 5 to fasten them together as shown in Fig. 4. The thread 17 first cuts a hole in the crosspiece 2 and then in the wooden frame 5. As the screw 11 advances, the spacer 21 is forcibly inserted into the hole formed in the crosspiece 2 by the thread 7 until the head 14 abuts the outer surface of the crosspiece 2.

By the time the head 14 abuts the outer surface of the crosspiece 2, the thread 17 is completely driven into the wooden frame 5, and the spacer 21 is completely inserted in the hole formed in the crosspiece 2 by the thread 17.

Since the spacer 21 has a greater outer diameter than the major diameter of the thread 17, the spacer 21 is pressed into the hole formed in the crosspiece 2 by the thread. Thus, the spacer 21 cannot turn in the hole of the crosspiece 2. Also, once the screw 11 is fully driven in as shown in Fig. 4, the spacer 21, which is being pressed hard radially inwardly, can hardly move axially relative to the crosspiece 2. The spacer 21 is also prevented from axially moving relative to the shank 12 by the rib or ribs 19. Thus, the spacer 21 prevents any axial movement of the screw 11 relative to the crosspiece 2 from the position of Fig. 4. It particularly prevents the screw 11 from being pulled out of the crosspiece 2.

But as described above, the shank 12 can turn relative to the spacer 21 and thus the crosspiece 2 with minimum resistance because the contact area between the small-diameter portion 16b and the spacer 21 is small.

Thus, the distance between the crosspiece 2 and the wooden frame 5 can be adjusted simply by engaging a driver bit in the driver engaging hole 13 formed in the head 14 of the screw 11 and turning it in a required direction. That is, by turning the shank 12 clockwise, the thread 17 is driven deep into the wooden frame 5. But because the shank 12 and thus the thread 17 cannot move axially relative to the crosspiece 2, the wooden frame 5 itself will move toward the crosspiece 2. That is, the distance between the wooden frame 5 and the crosspiece 2 shortens. Conversely, by turning the shank 12 counterclockwise, the distance between the wooden frame 5 and the crosspiece 2 increases. Since the shank 12 can be turned with minimum frictional resistance, the distance between the wooden frame 5 and the crosspiece 2 is adjustable accurately with minimum efforts.

With the thread on the shank of the screw engaged in a first wooden member and the spacer, which is fitted around the non-threaded portion of the shank, pressed into a hole formed in a second wooden member by the thread of the screw, the spacer permits the shank to turn with minimum frictional resistance while preventing the shank from moving axially. Thus, by turning the shank in a desired or required direction, the distance between the first and second wooden members is adjustable accurately with minimum effort.

## Claims

1. A screw comprising a shank having a head provided at one end thereof and a tip at the other end thereof, said shank having a thread extending from an intermediate portion of said shank to said tip, and a non-threaded portion extending from said intermediate portion to said head, said non-threaded portion being formed with a first rib; and a tubular spacer having a slit extending substantially in an axial direction of said spacer over the entire length thereof, said spacer being adapted to be rotatably fitted around said shank between said head and said first rib.

2. A screw as claimed in claim 1 wherein said shank further includes a second rib having a lower radial height than said first rib and provided on an outer surface of said shank at its portion where said tubular spacer is adapted to be fitted.

3. A screw as claimed in claim 1 wherein said thread has a major diameter, said first rib is a substantially annular member having an outer diameter smaller than the major diameter of said thread, and said spacer has an outer diameter greater than the outer diameter of said first rib.

4. A screw as claimed in claim 2 wherein said thread has a major diameter, said first rib is a substantially annular member having an outer diameter smaller than the major diameter of said thread, and said spacer has an outer diameter greater than the outer diameter of said first rib.
